# EUROPEAN PATENT SPECIFICATION

(11) **EP 4 223 387 B1**
(45) Date of publication and mention of the grant of the patent: **04.09.2024**
(21) Application number: 23150798.9
(22) Date of filing: 09.01.2023
(51) Int. Cl.: B01D 46/00, B01D 46/02, B01D 46/24, B01D 46/52, B01D 46/60

(54) **MIST AND VAPOR ELIMINATING FILTER, DEVICE, SYSTEM AND METHOD OF USE**
FILTER ZUR ENTFERNUNG VON NEBEL UND DÄMPFEN, VORRICHTUNG, SYSTEM UND VERFAHREN ZUR VERWENDUNG
FILTRE, DISPOSITIF, SYSTÈME ET PROCÉDÉ D'UTILISATION POUR ÉLIMINER LES VAPEURS ET LES VAPEURS

(30) Priority: 03.02.2022 US 202217592021
(43) Date of publication of application: 09.08.2023
(73) Proprietor: Pall Corporation, Port Washington, NY 11050 (US)
(72) Inventor: ROBB, James, Portsmouth, PO6 1TD (GB); SKULL, Stuart M., Portsmouth, PO6 1TD (GB); ROUX, Paul D., Portsmouth, PO6 1TD (GB)
(74) Representative: J A Kemp LLP

(56) References cited:
- WO-A1-2017/184780
- DE-A1- 102018 215 603
- GB-A- 2 089 237
- US-A- 4 130 487

## Description

### BACKGROUND OF THE INVENTION

There is a need to improve the cabin air quality delivered by the environmental control system (ECS) in an airplane, particularly during ground operation. Relevant filter systems are known from WO 2017/184780 A1, GB 2 089 237 A, DE 10 2018 215603 A1 and US 4 130 487 A. The present invention provides for ameliorating at least some of the disadvantages of the prior art. These and other advantages of the present invention will be apparent from the description as set forth below.

### BRIEF SUMMARY OF THE INVENTION

An aspect of the invention provides a mist and vapor eliminating filter comprising a first stage hollow filter and a second stage hollow filter; (a) the first stage hollow filter comprising a first housing having a first housing first end and a first housing second end; and, arranged in the first housing: (i) a first adsorption element comprising activated carbon and/or activated clay; and, (ii) a first hydrophobic pleated hollow porous medium surrounding the first adsorption element; the first stage hollow filter including a first end cap connected to the first housing first end; (b) the second stage hollow filter comprising a second housing having second housing first end and a second housing second end; and, arranged in the second housing: (iii) a second adsorption element comprising activated carbon and/or activated clay; (iv) a second hydrophobic pleated hollow porous medium surrounding the second adsorption element; the second stage hollow filter including a second end cap connected to the second housing second end; (c) wherein the first housing second end is connected to the second housing first end by an intermediate end cap; the intermediate end cap including a first drain channel for draining condensed water between the first housing second end and the second housing first end; and, the second end cap including a second drain channel for draining condensed water at the second housing second end.

Another aspect of the invention provides a mist and vapor eliminating filter device comprising (a) a main housing including a main housing body, an inlet duct connected to a first end of the main housing body, and an outlet duct connected to a second end of the main housing body; and, (b) an aspect of the mist and vapor eliminating filter arranged in the main housing between the inlet duct and the outlet duct.

In yet another aspect of the invention, a method of filtering aircraft cabin air comprises passing the aircraft air through an aspect of the mist and vapor eliminating filter device.

Another aspect of the invention provides a system for filtering aircraft air comprising: (A) a mist and vapor eliminating filter device comprising a main housing including a main housing body, an inlet duct connected to a first end of the main housing body, and an outlet duct connected to a second end of the main housing body; and, a mist and vapor eliminating (MaVE) filter comprising a first stage filter and a second stage filter; (a) the first stage hollow filter comprising a first housing having a first housing first end and a first housing second end; and, arranged in the first housing: (i) a first adsorption element comprising activated carbon and/or activated clay; and, (ii) a first hydrophobic pleated hollow porous medium surrounding the first adsorption element; the first stage hollow filter including a first end cap connected to the first housing first end; (b) the second stage hollow filter comprising a second housing having second housing first end and a second housing second end; and, arranged in the second housing: (iii) a second adsorption element comprising activated carbon and/or activated clay; (iv) a second hydrophobic pleated hollow porous medium surrounding the second adsorption element; the second stage hollow filter including a second end cap connected to the second housing second end; wherein the first housing second end is connected to the second housing first end by an intermediate end cap; the intermediate end cap including a first drain channel for draining condensed water between the first housing second end and the second housing first end; and, the second end cap including a second drain channel for draining condensed water at the second housing second end; wherein the mist and vapor eliminating filter device is arranged in the main housing between the inlet duct and the outlet duct; the system further comprising (B) a bypass valve including a pivotable bypass plate, arranged in a hollow sleeve, wherein the hollow sleeve is arranged between the main housing body and the outlet duct, the hollow sleeve providing an aircraft air flow path through the MaVE filter device partially bypassing the MaVE filter when the bypass valve is opened.

Another aspect of the invention provides a method of filtering aircraft cabin air, the method comprising passing the aircraft air through an aspect of a system for filtering aircraft air comprising: (A) a mist and vapor eliminating filter device comprising a main housing including a main housing body, an inlet duct connected to a first end of the main housing body, and an outlet duct connected to a second end of the main housing body; and, a mist and vapor eliminating (MaVE) filter comprising a first stage filter and a second stage filter; (a) the first stage hollow filter comprising a first housing having a first housing first end and a first housing second end; and, arranged in the first housing: (i) a first adsorption element comprising activated carbon and/or activated clay; and, (ii) a first hydrophobic pleated hollow porous medium surrounding the first adsorption element; the first stage hollow filter including a first end cap connected to the first housing first end; (b) the second stage hollow filter comprising a second housing having second housing first end and a second housing second end; and, arranged in the second housing: (iii) a second adsorption element comprising activated carbon and/or activated clay; (iv) a second hydrophobic pleated hollow porous medium surrounding the second adsorption element; the second stage hollow filter including a second end cap connected to the second housing second end; wherein the first housing second end is connected to the second housing first end by an intermediate end cap; the intermediate end cap including a first drain channel for draining condensed water between the first housing second end and the second housing first end; and, the second end cap including a second drain channel for draining condensed water at the second housing second end; wherein the mist and vapor eliminating filter device is arranged in the main housing between the inlet duct and the outlet duct; the system further comprising (B) a bypass valve including a pivotable bypass plate, arranged in a hollow sleeve, wherein the hollow sleeve is arranged between the main housing body and the outlet duct, the hollow sleeve providing an aircraft air flow path through the MaVE filter device partially bypassing the MaVE filter when the bypass valve is opened; opening the bypass valve; and flowing aircraft air through the MaVE filter device while partially bypassing the MaVE filter. Preferably, the method also includes comprising closing the bypass valve and flowing aircraft air through the MaVE filter.

The method of filtering aircraft cabin air comprising passing the aircraft air through an aspect of the mist and vapor eliminating filter device and/or through an aspect of the system also includes collecting free water on an upstream surface of the first hydrophobic pleated hollow porous medium and collecting free water on an upstream surface of the second hydrophobic pleated hollow porous medium. The method also includes passing the collected free water on the upstream surface of the first hydrophobic pleated hollow porous medium through the first drain channel, and passing the collected free water on the upstream surface of the second hydrophobic pleated hollow porous medium through the second drain channel.

### BRIEF DESCRIPTION OF THE SEVERAL VIEWS OF THE DRAWING(S)

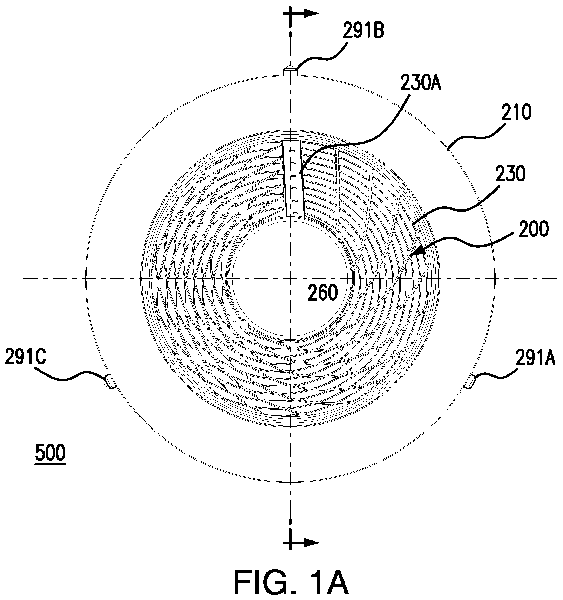

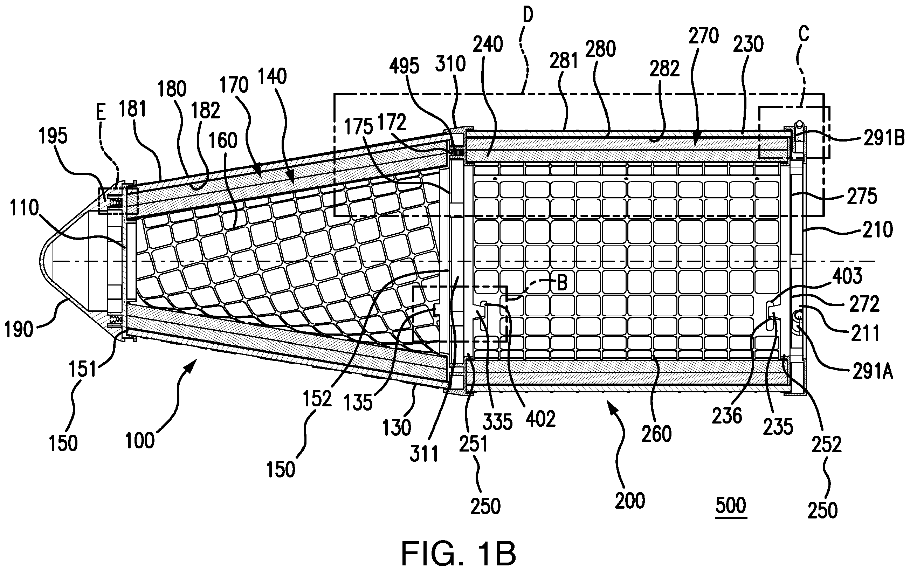

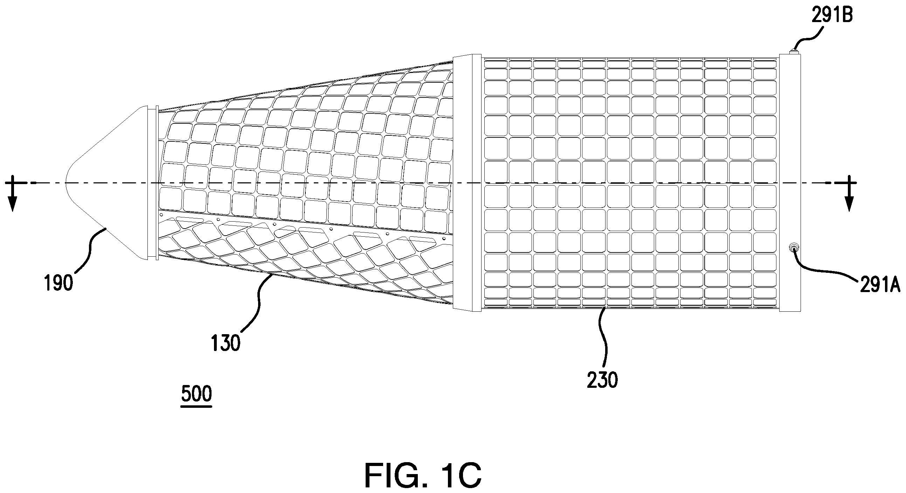

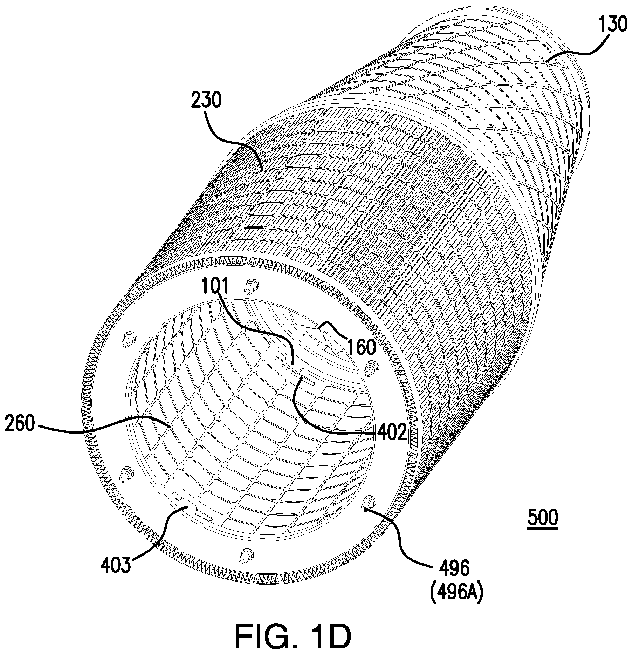

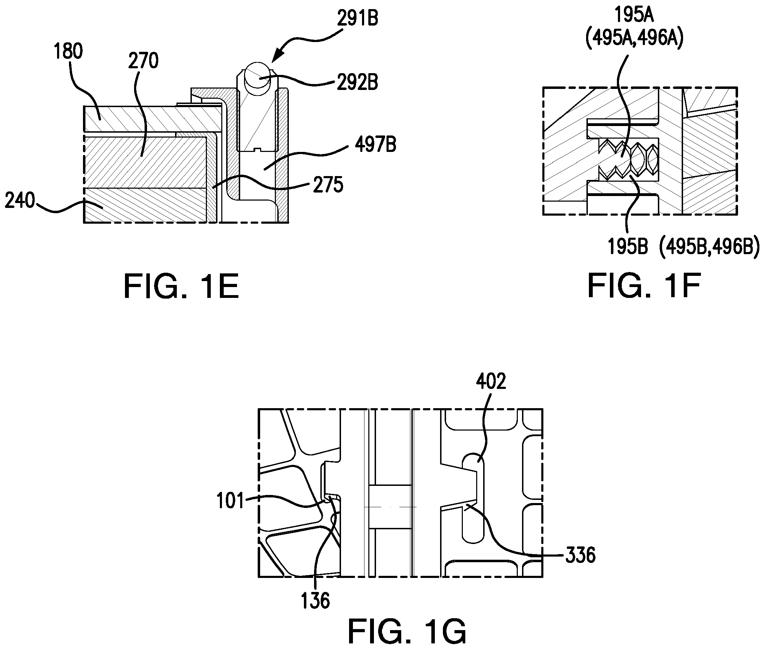

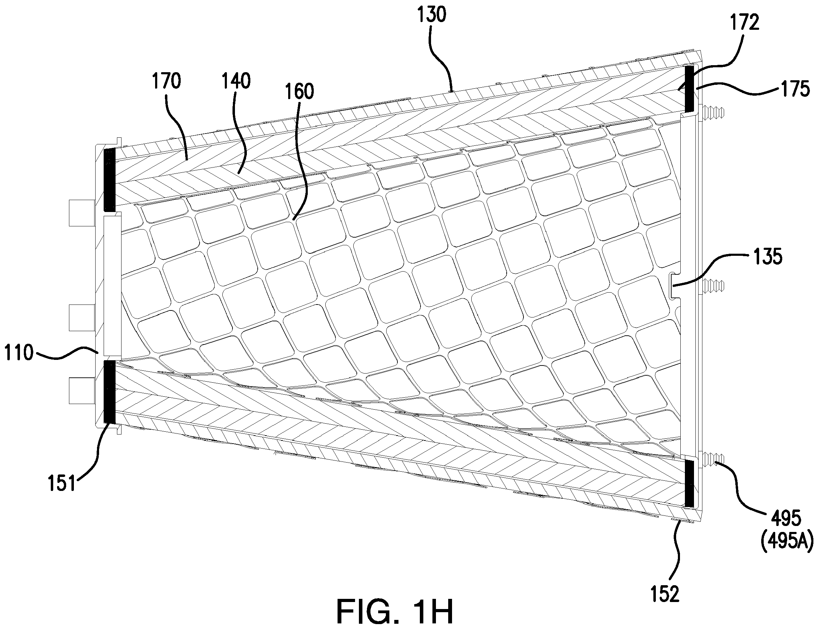

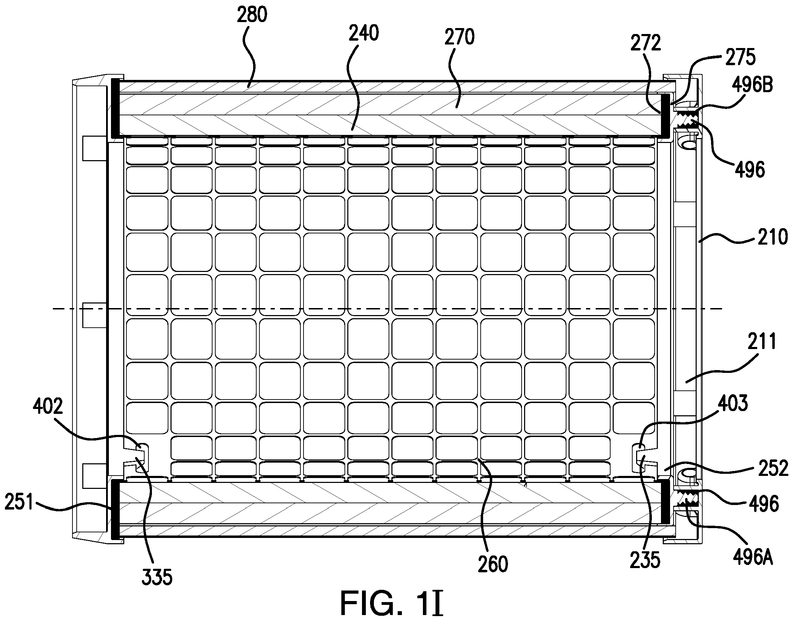

Figure 1A is a drawing showing a back view of a mist and vapor eliminating (MaVE) filter according to an aspect of the invention, also showing 3 detent arrangements on a second end cap of the filter; Figure 1B is a drawing showing a cross-sectional view of the MaVE filter along line A-A of Figure 1A, showing a nose cone connected to a first end cap, a first stage hollow filter and a second stage hollow filter; Figure 1C is a drawing showing a side view of the MaVE filter shown in Figures 1A and 1B; Figure 1D is a drawing showing a rear isometric view of the MaVE filter shown in Figure 1C, with a second housing second end and the second end cap removed, showing an open second end of a second hydrophobic pleated hollow porous medium, retained by, but not sealed to, the second end cap; Figure 1E is a drawing showing an enlarged view of detail C shown in Figure 1B, illustrating a detent arrangement on the second end cap; Figure 1F is a drawing showing an enlarged view of detail E shown in Figure 1B, showing a joining arrangement joining a nose cone of the MaVE filter to a first end cap; Figure 1G is a drawing showing an enlarged view of detail B in Figure 1B of a first clip lock joining a second end of the first housing to a second end of a first inner cage of a first stage hollow filter; and a second clip lock joining an intermediate end cap to a first end of a second inner cage of a second stage hollow filter; Figure 1H is a drawing showing a cross-sectional view of the first stage hollow filter; Figure 1I is a cross-sectional view of the second stage hollow filter.
Figures 2A-2B are drawings showing the nose cone, Figure 2A is a rear isometric view, Figure 2B is a side view.
Figures 3A-3C are drawings showing the first end cap, Figure 3A is a rear isometric view, Figure 3B is a rear view; Figure 3C is a side view.
Figures 4A-4C are drawings showing a first adsorption element end cap, Figure 4A is a rear isometric view, Figure 4B is a rear view; Figure 4C is a side view.
Figures 5A-5C are drawings showing the intermediate end cap, Figure 5A is a rear isometric view, Figure 5B is a rear view; Figure 5C is a side view.
Figures 6A-6C are drawings showing the second adsorption element end cap, Figure 6A is a rear isometric view, Figure 6B is a rear view; Figure 6C is a side view.
Figures 7A-7C are drawings showing the second end cap, Figure 7A is a rear isometric view, Figure 7B is a rear view; Figure 7C is a side view.

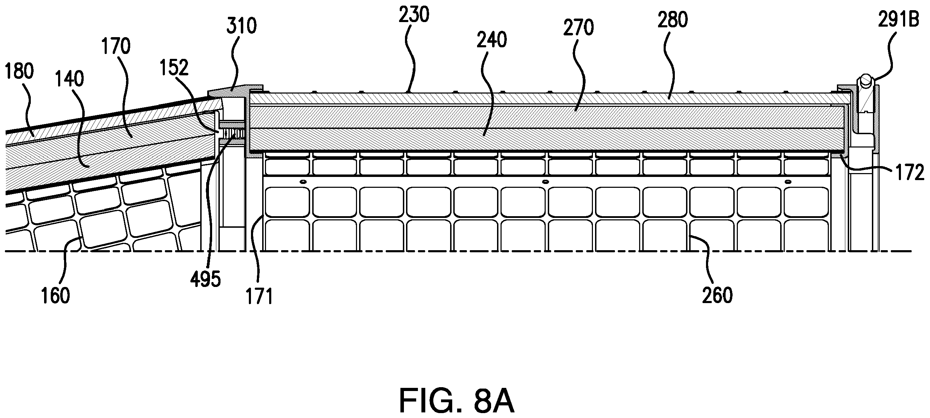

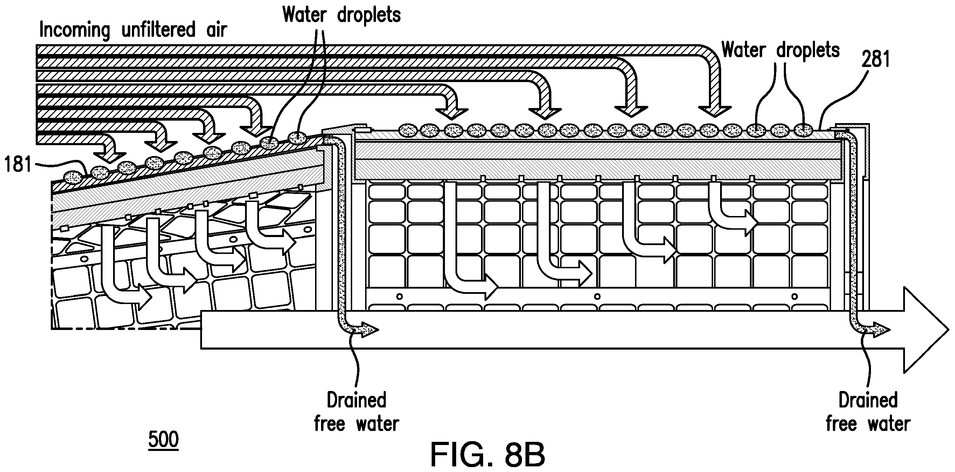

Figure 8A is a drawing showing an enlarged partial sectional view of an aspect of the MaVE filter shown in detail D of Figure 1B. Figure 8B shows a diagrammatic representation of collecting and draining condensed water vapor as aircraft air passes through the mist and vapor eliminating filter device shown in Figure 1A and 8A via outside to inside flow, wherein aircraft air, stripped of at least a portion of the mist and vapor initially present by the first and second hydrophobic pleated hollow porous media, passes through first and second adsorption elements, also showing the adsorption elements sealed to end caps, and hydrophobic pleated hollow porous media retained by the end caps.

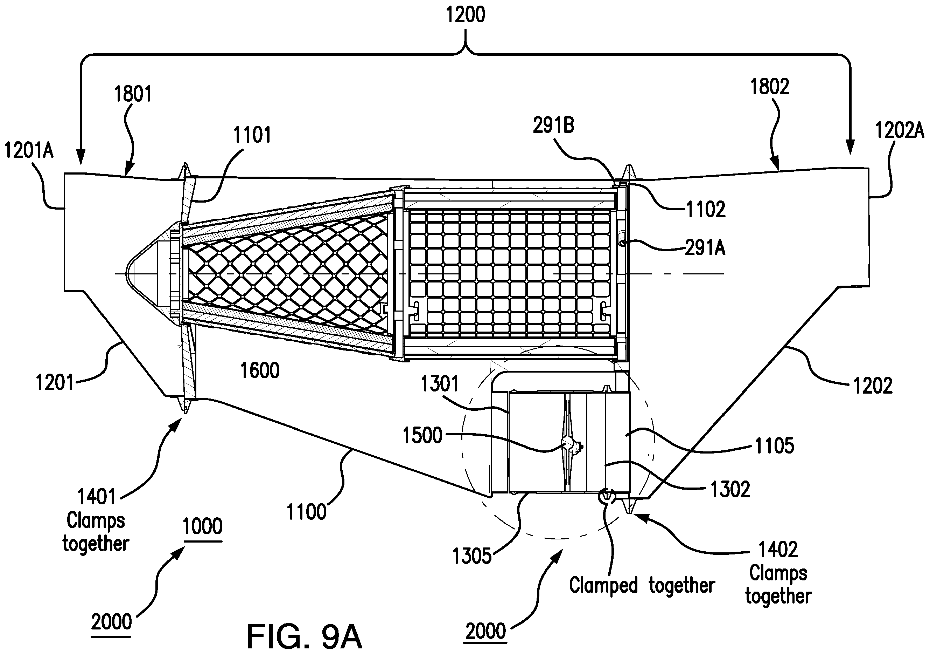

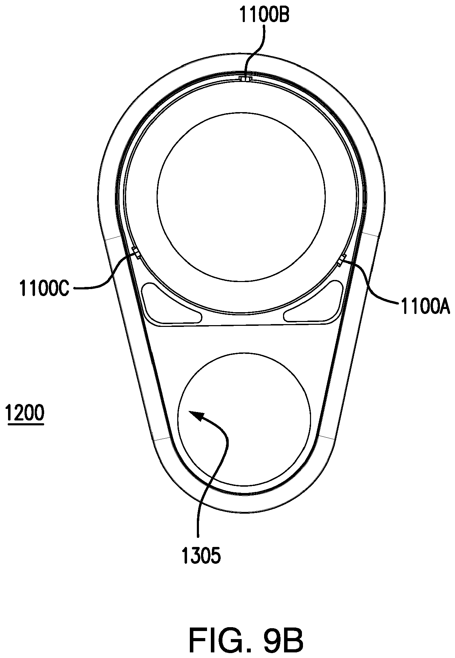

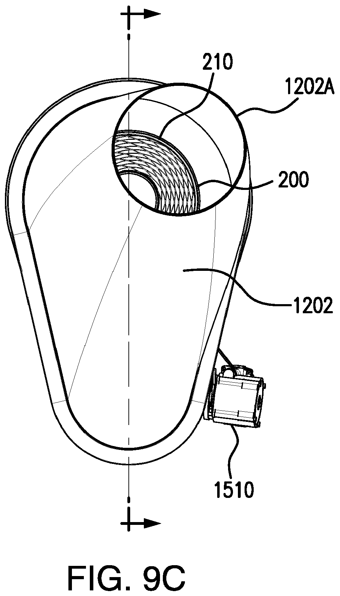

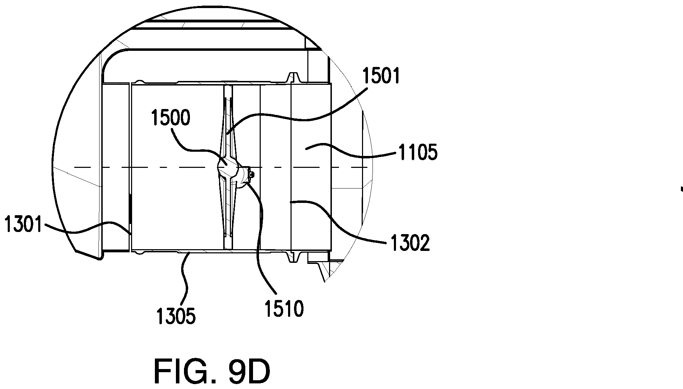

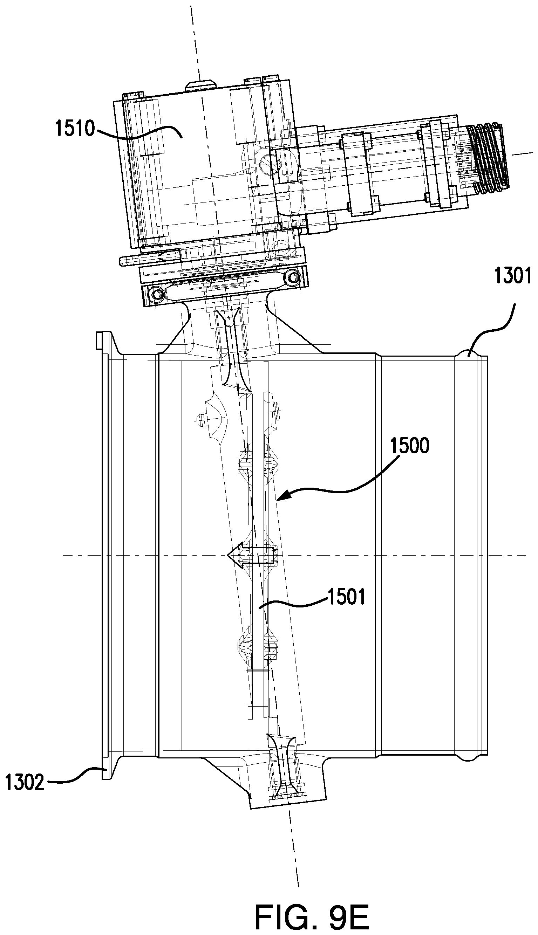

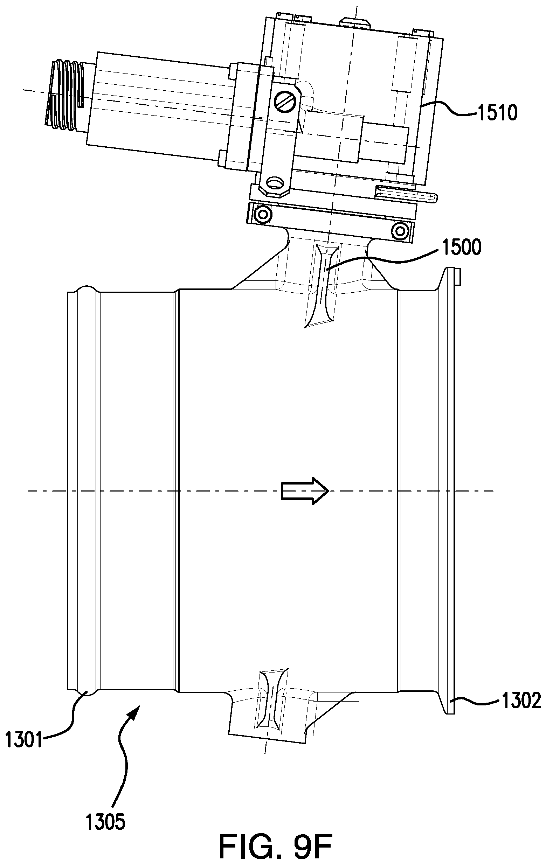

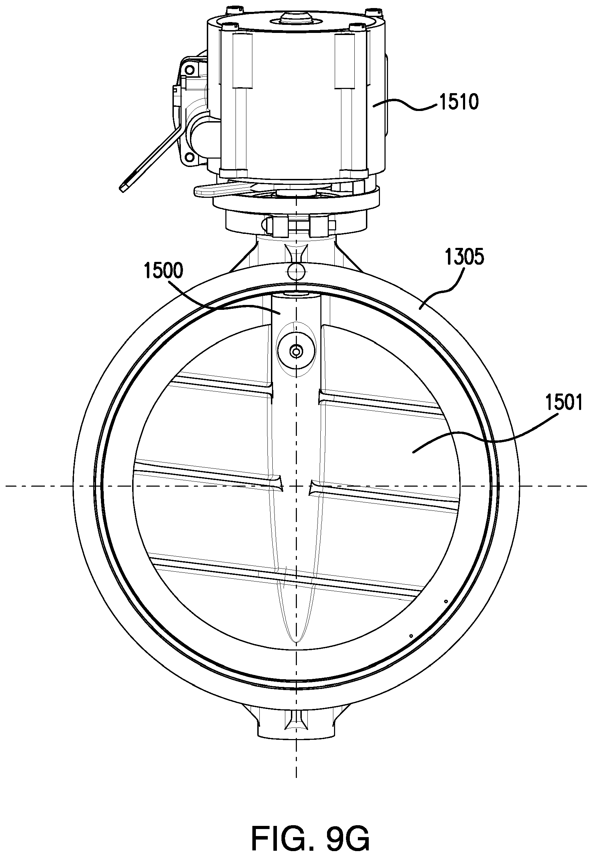

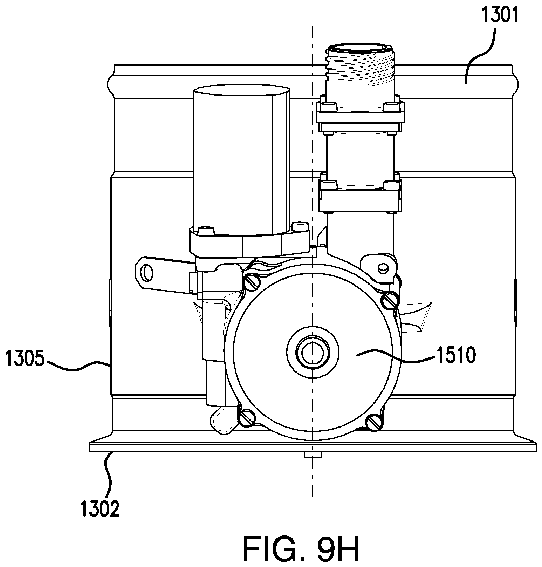

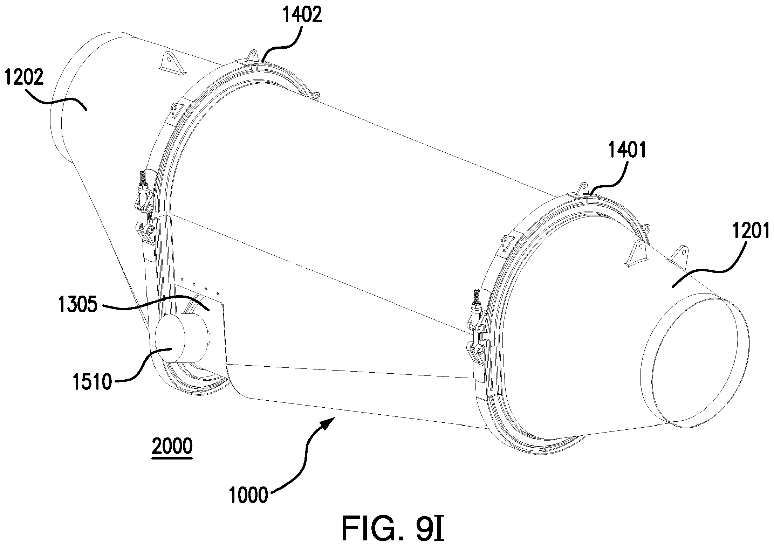

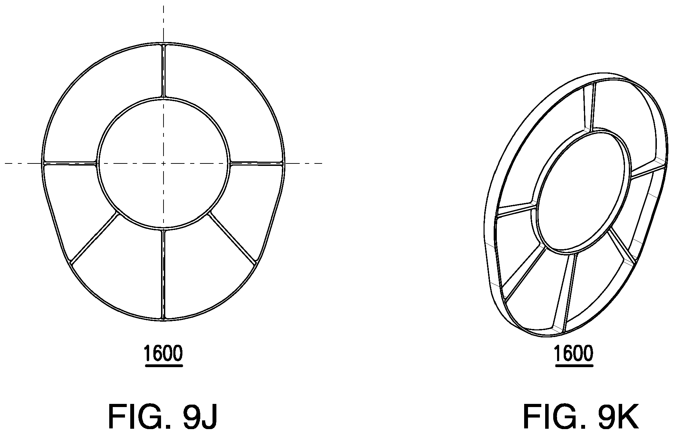

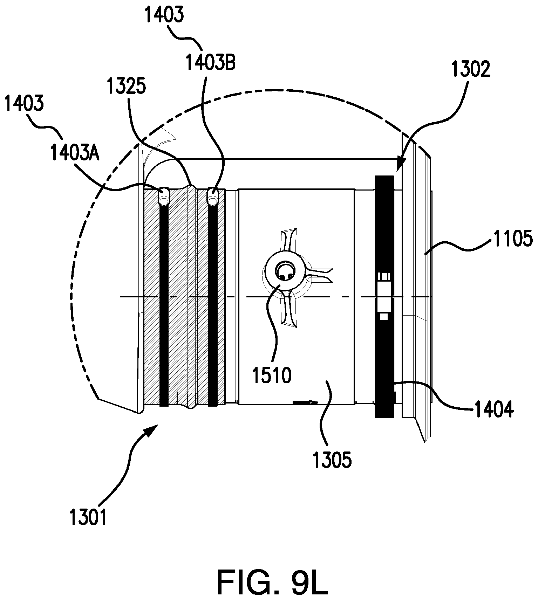

Figure 9A is a drawing showing a cross-sectional view of a system for filtering aircraft air including a MaVE filter device according to an aspect of the invention, including the MaVE filter shown in Figure 1A arranged in a main housing including a main housing body, an inlet duct connected to a first end of the main housing body by a first clamping arrangement, an outlet duct connected to a second end of the main housing body by a second clamping arrangement, and a bypass valve in a sleeve arranged between the main housing body and the outlet duct, for providing an aircraft air flow path through the MaVE filter device partially bypassing the MaVE filter, also showing sensors arranged upstream and downstream of the MaVE filter; Figure 9B is a drawing showing a front view of the main housing body shown in Figure 9A, also showing cavities for receiving detent arrangements on a second end cap on the MaVE filter (detail C in Figure 1B) such that the filter can be locked in position in the main housing; Figure 9C is a drawing showing a front view of the MaVE filter device shown in Figure 9A, showing the outlet duct port offset from the second end of the second stage hollow filter, also showing a bypass valve actuator, Figure 9D is a drawing showing an enlarged view of detail B shown in Figure 9A, illustrating a sleeve containing the bypass valve; Figure 9E is a drawing showing a cross-sectional view of the right side of the sleeve containing the bypass valve and bypass valve plate, and the bypass valve actuator attached to the bypass valve, also including a centrally arranged arrow showing the direction of air flow through the sleeve and bypass valve when the valve is open (also showing the valve shaft arranged at an angle and the valve plate vertically arranged in the sleeve); Figure 9F is a drawing showing the left side of the sleeve and bypass valve actuator shown in Figure 9E including an arrow showing the direction of air flow through the sleeve and bypass valve when the valve is open; Figure 9G is a front view of the sleeve containing the bypass valve and bypass valve plate, and the bypass valve actuator attached to the bypass valve shown in Figure 9F; Figure 9H is a top view of the bypass actuator and sleeve shown in Figure 9F; Figure 9I is a drawing showing an isometric rear view of the MaVE filter device shown in Figure 9A, Figures 9J and 9K are, respectively, drawings of the front, and rear perspective views of the spider plate, and Figure 9L is a drawing showing a modified view of detail B shown in 9A,
Figure 10 is a drawing showing a diagrammatic representation of the environmental control system (ECS) showing how the fresh aircraft and recirculated air passes through an air mixing unit and mist and vapor eliminating (MaVE) filter devices and subsequently through the aircraft, including filtering the recirculated air through high efficiency particulate air/volatile organic compound (HEPA/VOC) filters.
Figure 11 is a drawing showing an exemplary diagrammatic representation of a control system for controlling flow of the bypass valves in systems for filtering aircraft air including MaVE filter devices according to an aspect of the invention

### DETAILED DESCRIPTION OF THE INVENTION

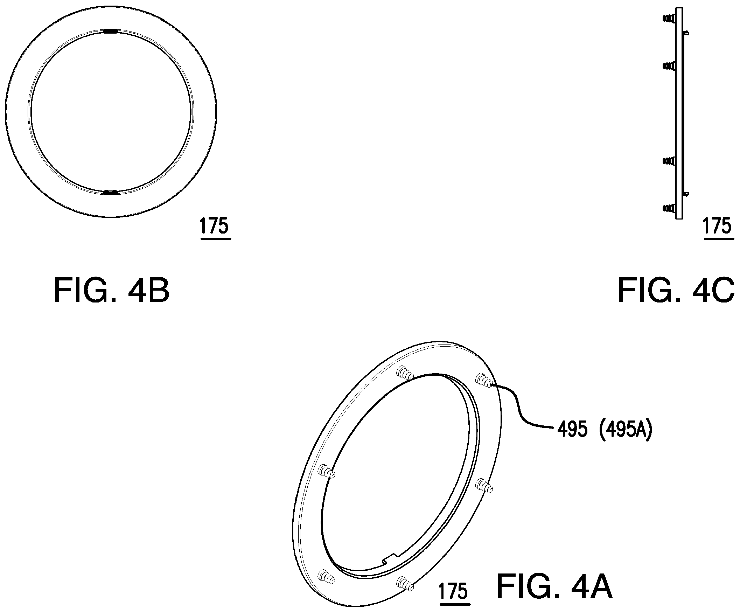

In ECS systems, both fresh and recirculated (filtered through a high efficiency particulate air/volatile organic compound (HEPA/VOC) filter) air is distributed through the aircraft cabin in varying proportions depending on the aircraft type, typically, approximately 50% to 60% fresh air, and approximately 40%-50% filtered recirculated air. The fresh air is delivered to the ECS from either the engines or auxiliary power unit (APU) through two air conditioning packs that regulate air pressure and temperature *(see,* Figure 4). During certain outside air conditions (for example, ground operations), the air conditioning packs condense water vapor present in the air as free water in the form of a mist. Without the ability to handle the free water content, the free water can adversely impact the efficiency of the VOC filter through wetting, which can lead to bacterial growth and introduce unpleasant odors into the cabin, or increase the pressure loss across the pleated filter medium/media.

Advantageously, aspects of the mist and vapor eliminator (MaVE) filter(s) according to the invention strip the free water (e.g., in the form of a mist) from the cabin air, preventing it from wetting the adsorption element and reducing VOC performance (*see*, Figure 4, showing aspects of the invention combined with a conventional ECS system). Moreover, managing the flow of free water minimizes an increase in differential pressure, thus reducing or avoiding the possible negative impact on the ECS's ability to maintain the required levels of ventilation air flow. In another advantage, the stripped free water/water droplets can be reintroduced to the airflow downstream of the MaVE filter, maintaining the evaporative cooling function of the ECS.

An aspect of the invention provides a MaVE filter comprising a first stage hollow filter and a second stage hollow filter; (a) the first stage hollow filter comprising a first housing having a first housing first end and a first housing second end; and, arranged in the first housing: (i) a first adsorption element comprising activated carbon and/or activated clay; and, (ii) a first hydrophobic pleated hollow porous medium surrounding the first adsorption element; the first stage hollow filter including a first end cap connected to the first housing first end; (b) the second stage hollow filter comprising a second housing having second housing first end and a second housing second end; and, arranged in the second housing: (iii) a second adsorption element comprising activated carbon and/or activated clay; (iv) a second hydrophobic pleated hollow porous medium surrounding the second adsorption element; the second stage hollow filter including a second end cap connected to the second housing second end; (c) wherein the first housing second end is connected to the second housing first end by an intermediate end cap; the intermediate end cap including a first drain channel between the first housing second end and the second housing first end; and, the second end cap including a second drain channel at the second housing second end.

In an aspect of the MaVE filter, the first adsorption element and the first hydrophobic pleated hollow porous medium each have a tapered configuration.

In a preferred aspect of the MaVE filter, the filter further comprises a first adsorption element end cap, sealed to an end of the first adsorption element, the first adsorption element end cap contacting the intermediate end cap; and a second adsorption element end cap, sealed to an end of the second adsorption element, the second adsorption element end cap contacting the second end cap.

In a typical aspect of the MaVE filter, the first hydrophobic pleated hollow porous medium is retained by the intermediate end cap, and the second hydrophobic pleated hollow porous medium is retained by the end cap.

In another aspect of the MaVE filter, the intermediate end cap provides a drain gap in the range of from 6 mm to 18 mm for the first drain channel, and the second end cap provides a drain gap in the range of from 6 mm to 18 mm for the second drain channel.

In a preferred aspect of the MaVE filter, the first and second stage filters each include respective first and second outer cages and respective first and second inner cores, and in some aspects, the first and second stage filters each further include respective perforated cages arranged between the adsorption elements and the inner cores.

Typically, the MaVE filter includes at least two joining arrangements connecting the first housing second end to the intermediate end cap, and at least two additional joining arrangements connecting the second housing second end to the second end cap.

Another aspect of the invention provides a mist and vapor eliminating filter device comprising (a) a main housing including a main housing body, an inlet duct connected to a first end of the main housing body, and an outlet duct connected to a second end of the main housing body; and, (b) an aspect of the mist and vapor eliminating filter arranged in the main housing between the inlet duct and the outlet duct.

In yet another aspect of the invention, a method of filtering aircraft cabin air comprises passing the aircraft air through an aspect of the mist and vapor eliminating filter device and/or passing the aircraft air through an aspect of the system for filtering aircraft air. In an aspect, the method also includes collecting free water on an upstream surface of the first hydrophobic pleated hollow porous medium and collecting free water on an upstream surface of the second hydrophobic pleated hollow porous medium. In a preferred aspect, the method includes passing the collected free water on the upstream surface of the first hydrophobic pleated hollow porous medium through the first drain channel, and passing the collected free water on the upstream surface of the second hydrophobic pleated hollow porous medium through the second drain channel.

In one aspect, the method further includes passing water along the drain channels and reintroducing the suspended free water back into the downstream ventilation air flow, thereby allowing the water to re-evaporate as the air flow progresses along the ventilation ducting. The stripped water travels along the top surface of the membrane (propelled by the flow of air along the filter) to the water drain channels, where the water bypasses the MaVE filter, to be re-entrained into the downstream airflow. Once re-entrained, the free water, in the form of droplets, is then able to evaporate as it travels in the airflow along the ventilation ducting, enabling the system to continue to capitalize on this additional evaporative cooling effect.

Illustratively, with respect to additional evaporative cooling, a volume of free water droplets is re-evaporated, such that energy, in the form of heat, is essentially transferred from the air (sensible heat) to the water droplets (latent heat) through evaporation. This can be provided by mixing of the cold air from delivered by the air-conditioning pack, which contains the free water, with the warmer recirculated air. The level of cooling delivered (defined in KW) is dependent on the specific environmental conditions of the day and the target condition to be achieved in the aircraft. For example, if a free water content of 1 g of water per 1 Kg of air was delivered by the air conditional pack, the additional cooling effect achieved could deliver as much as 1.7KW of additional cooling.

In another aspect of the invention, a system for filtering aircraft air is provided, the system including an aspect of the MaVE filter device, and further comprising a bypass valve including a pivotable bypass plate, arranged in a hollow sleeve, wherein the hollow sleeve is arranged between the main housing body and the outlet duct, the hollow sleeve providing an aircraft air flow path through the MaVE filter device partially bypassing the MaVE filter when the bypass valve is opened.

In an aspect of the system, the first adsorption element and the first hydrophobic pleated hollow porous medium each have a tapered configuration. Alternatively, or additionally, aspects of the system include any one or more of the following: the MaVE filter further comprises a first adsorption element end cap, sealed to an end of the first adsorption element, the first adsorption element end cap contacting the intermediate end cap, and a second adsorption element end cap, sealed to an end of the second adsorption element, the second adsorption element end cap contacting the second end cap; the first hydrophobic pleated hollow porous medium is retained by the intermediate end cap, and the second hydrophobic pleated hollow porous medium is retained by the end cap; the intermediate end cap provides a drain gap in the range of from 6 mm to 18 mm for the first drain channel, and the second end cap provides a drain gap in the range of from 6 mm to 18 mm for the second drain channel; the MaVE filter includes at least two joining arrangements connecting the first housing second end to the intermediate end cap, and at least two additional joining arrangements connecting the second housing second end to the second end cap; the first stage hollow filter includes a first stage outer cage and a first stage inner core; and, the second stage hollow filter includes a second stage outer cage and a second stage inner core.

Another aspect of the invention provides a method of filtering aircraft cabin air, the method comprising passing the aircraft air through an aspect of a system for filtering aircraft air comprising: (A) a mist and vapor eliminating filter device comprising a main housing including a main housing body, an inlet duct connected to a first end of the main housing body, and an outlet duct connected to a second end of the main housing body; and, a mist and vapor eliminating (MaVE) filter comprising a first stage filter and a second stage filter; (a) the first stage hollow filter comprising a first housing having a first housing first end and a first housing second end; and, arranged in the first housing: (i) a first adsorption element comprising activated carbon and/or activated clay; and, (ii) a first hydrophobic pleated hollow porous medium surrounding the first adsorption element; the first stage hollow filter including a first end cap connected to the first housing first end; (b) the second stage hollow filter comprising a second housing having second housing first end and a second housing second end; and, arranged in the second housing: (iii) a second adsorption element comprising activated carbon and/or activated clay; (iv) a second hydrophobic pleated hollow porous medium surrounding the second adsorption element; the second stage hollow filter including a second end cap connected to the second housing second end; wherein the first housing second end is connected to the second housing first end by an intermediate end cap; the intermediate end cap including a first drain channel between the first housing second end and the second housing first end; and, the second end cap including a second drain channel at the second housing second end; wherein the mist and vapor eliminating filter device is arranged in the main housing between the inlet duct and the outlet duct; the system further comprising (B) a bypass valve including a pivotable bypass plate, arranged in a hollow sleeve, wherein the hollow sleeve is arranged between the main housing body and the outlet duct, the hollow sleeve providing an aircraft air flow path through the MaVE filter device partially bypassing the MaVE filter when the bypass valve is opened; opening the bypass valve; and flowing aircraft air through the MaVE filter device while partially bypassing the MaVE filter. Preferably, the method also includes comprising closing the bypass valve and flowing aircraft air through the MaVE filter.

In some aspects, the method includes repeatedly alternating between closing the bypass valve and flowing aircraft air through the MaVE filter, and opening the bypass valve; and flowing aircraft air through the MaVE filter device while partially bypassing the MaVE filter.

Aspects of filtering aircraft cabin air through an aspect of the system can include collecting free water on an upstream surface of the first hydrophobic pleated hollow porous medium and collecting free water on an upstream surface of the second hydrophobic pleated hollow porous medium; and can further include passing the collected free water on the upstream surface of the first hydrophobic pleated hollow porous medium through the first drain channel, and passing the collected free water on the upstream surface of the second hydrophobic pleated hollow porous medium through the second drain channel.

Each of the components of the invention will now be described in more detail below, wherein like components have like reference numbers.

The aspect of the MaVE filter 500 according to the invention shown in Figures 1A-1I comprises a first stage hollow filter 100 and a second stage hollow filter 200; the first stage hollow filter comprising a first housing 150 having a first housing first end 151 and a first housing second end 152 including an first housing second end plate 152A; and, arranged in the first housing: a first adsorption element 170 comprising activated carbon and/or activated clay; and, a first hydrophobic pleated hollow porous medium 180 surrounding the first adsorption element, the first hydrophobic pleated hollow porous medium 180 having an upstream surface 181 and a downstream surface 182; the first stage filter including a first end cap 110 connected to the first housing first end; the second stage hollow filter comprising a second housing 250 having second housing first end 251 and a second housing second end 252; and, arranged in the second housing: a second adsorption element 270 comprising activated carbon and/or activated clay; a second hydrophobic pleated hollow porous medium 280 surrounding the second adsorption element, the second hydrophobic pleated hollow porous medium 280 having an upstream surface 281 and a downstream surface 282; the second stage hollow filter including a second end cap 210 connected to the second housing second end by a joining arrangement 496 (Fig. 1I); wherein the first housing second end is connected to the second housing first end by an intermediate end cap 310, wherein the first housing second end is connected to the intermediate end cap by a joining arrangement 495; the intermediate end cap including a first drain channel 311 between the first housing second end and the second housing first end; and, the second end cap including a second drain channel 211 at the second housing second end.

The hydrophobic pleated hollow porous media 180, 280 provide for collecting and draining condensed water vapor on the upstream surfaces of the media and removing airborne particulates from the aircraft air, and the adsorption elements 170, 270 absorb volatile organic compounds (VOCs). The free water collected and drained from the upstream surfaces through the drain channels essentially bypasses the MaVE filter, minimizing the impact of excessive pressure loss on ECS performance. In the aspects shown in Figures 1B and 8B, the drain channels are arranged perpendicular to the general horizontal axis of the filter 500 as well as the first and second stage hollow filters 100, 200.

Typically, the intermediate end cap provides a drain gap in the range of from 6 mm to 18 mm, preferably, in the range of from 10 mm to 14 mm, for the first drain channel, and the second end cap provides a drain gap in the range of from 6 mm to 18 mm, preferably, in the range of from 10 mm to 14 mm, for the second drain channel.

Typically, aspects of the stage filters 100, 200 include respective first and second outer perforated cages 130, 230, to retain and protect the hydrophobic pleated hollow porous media and adsorption elements (each outer cage joined together at a seam, Figure 1A shows seam 230A for cage 230); and respective first and second inner cores (illustrated as perforated cages) 160, 260 (*see*, Figure 1D) to maintain structural integrity of each stage filter. Preferably, as shown in Figures 1B, 1D, and 8A, the stage filters 100, 200 include respective perforated cages 140, 240 arranged between the adsorption elements and the inner cores, e.g., to prevent adsorption element particle migration.

In some aspects, as shown in Figures 1B, and 1G, 1H, and 1I, housing ends 152 and 172 and end cap 310 are connected to the ends of the first and second stage hollow filters by clip locks 135, 235, 335, each clip lock comprising a hook 136 (on the first housing second end), 236 (on the second housing second end), 336 (on the intermediate end cap), and a slot 101, 402, 403 at respective ends of the inner cages 130 (at the second end first inner cage), 230 (at the first and second ends of the second inner cage) receiving the respective hooks. In one aspect, there are 2 clip locks at each end.

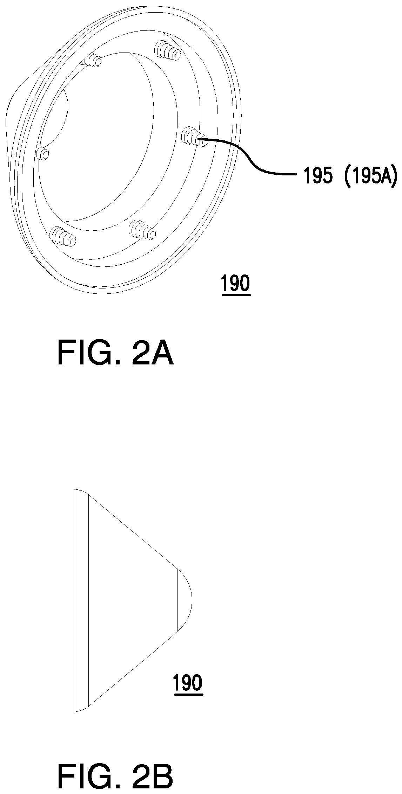

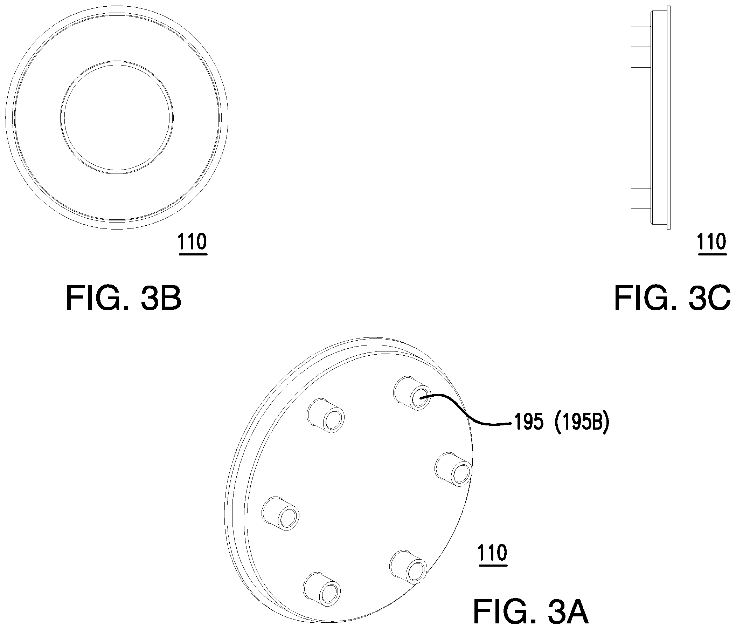

In a preferred aspect of the MaVE filter 500, the filter includes a nose cone 190 (*see*, Figures 2A-2B) attached to the first end cap 110 (*see*, Figures 3A-3C) by a joining arrangement 195 as shown in Figures 1B and 1F (similar to the joining arrangement 495 wherein the first housing second end is connected to the intermediate end cap by a joining arrangement as shown in Figure 1B, and the joining arrangement 496 wherein the second housing second end is joined to the second end cap as shown in Figure 1I). Advantageously, the inclusion of a nose cone improves the aerodynamic shape of the filter and can reduce pressure losses relating to turbulent airflow. As the nose cone is closed, air enters the filter through the outer perforated cages, rather than through the nose cone 190 and first end cap 110 (*see also*, Figure 8B).

A variety of joining arrangements are suitable for use in aspects of the invention. For example, Figures 1B, 1F, and 1I (Figure 1H showing a male portion 195A (wherein 495A, 496A are similar) of the joining arrangement) show joining arrangements comprising male (195A, 495A, 496A) and female portions (195B, 495B, 496B), and, if desired, adhesive between the portions to lock the housing ends to the end caps. Typically, the end caps include channels providing the female portions with the apertures at the end of the channels facing the housing ends (typically closed at the other ends of the channels) and the male portions include shoulders that engage with the inner walls of the channels.

Aspects of the invention can include any number of joining arrangements for each associated housing end and end cap and/or nose cone, typically, at least two, preferably, three or more, and the illustrated aspect includes 6 for each of the housing ends and end caps.

Preferably, in the aspect illustrated in Figures 1B-1D, and 9A, the first adsorption element 170 and the first hydrophobic pleated hollow porous medium 180 each have a tapered configuration, narrower at the first housing first end 151 and wider at the first housing second end 152. Advantageously, the tapered configuration can improve airflow and reduce pressure loss across the filter, and combined with the non-tapered configuration of the second adsorption element and the second hydrophobic pleated hollow porous medium, can maximize the hydrophobic pleated hollow porous media face area available.

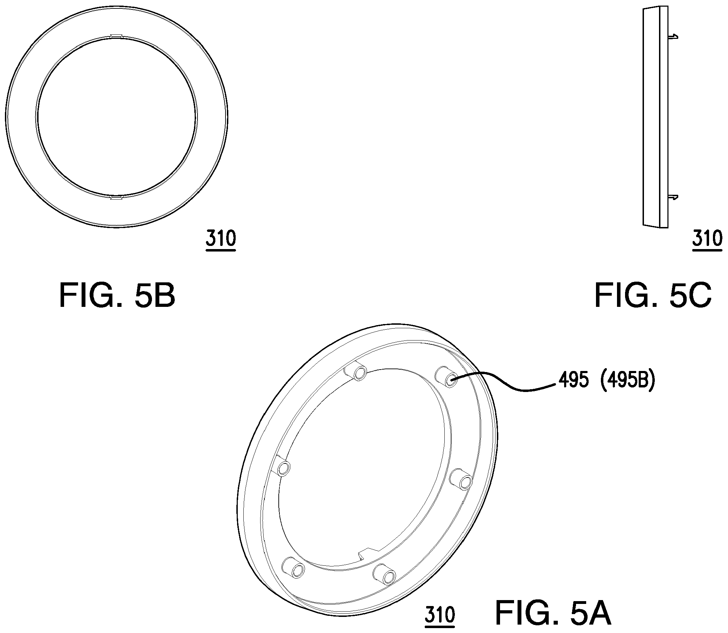

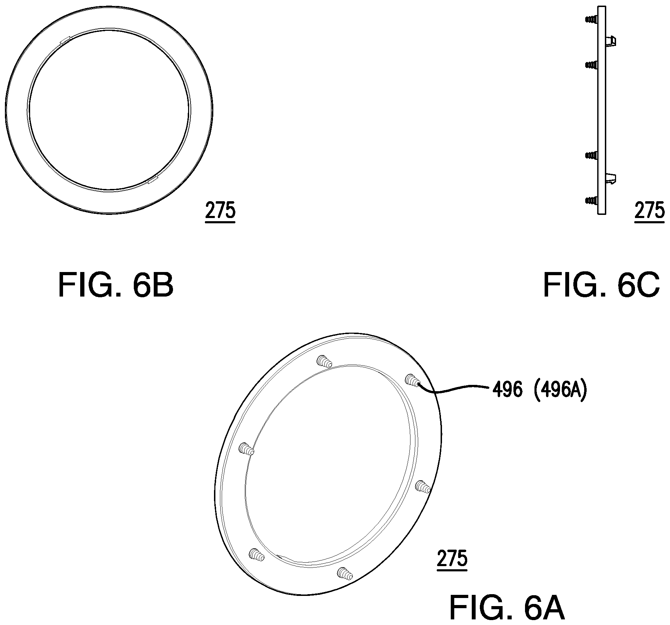

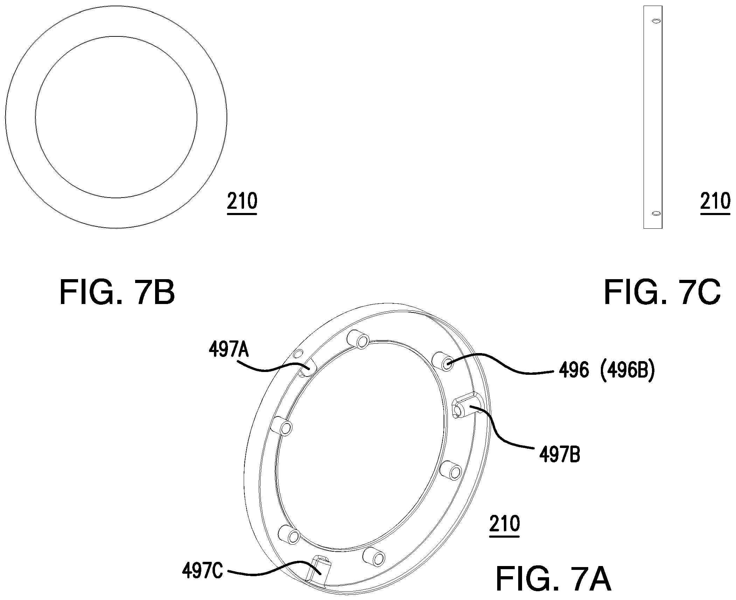

In the illustrated aspects of the MaVE filter 500, the filter further comprises a first adsorption element end cap 175 (*see*, Figures 4A-4C), sealed to a second end 172 of the first adsorption element 170, the first adsorption element end cap 175 contacting the intermediate end cap 310 (*see*, Figures 5A-5C); and a second adsorption element end cap 275 (*see*, Figures 6A-6C), sealed to a second end 272 of the second adsorption element 280, the second adsorption element end cap contacting the second end cap 210 (*see*, Figures 7A-7C).

Preferably, the second end of first hydrophobic pleated hollow porous medium is retained by the intermediate end cap 310, and the second end of the second hydrophobic pleated hollow porous medium is retained by the second end cap 210. Since the second ends of the hydrophobic pleated hollow porous media are retained by the end caps (rather than sealed, e.g., potted, to the end caps) the pleated ends remain open (*see, for example*, Figures 1D, and 8B, wherein Figure 1D in particular shows the open second end of the second hydrophobic pleated porous medium; the open second end of the first hydrophobic pleated porous medium is arranged the same way) providing an open path for free water to pass from the upstream surfaces of the hydrophobic pleated hollow porous media, through the drainage channels and back into the filtered airflow, as shown in Figure 8B.

The pleated hydrophobic porous media can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. The pore structure used depends on, for example, the size of the particles to be removed, and the desired effluent level of the filtered ar. In some aspects, the hydrophobic porous media (typically, membranes, preferably polytetrafluorethylene (PTFE) membranes) are microporous, having a pore size in the range of 3 micrometers to 20 micrometers, preferably in the range of 5 micrometers to 20 micrometers. Alternatively, or additionally, in some aspects, the hydrophobic porous media (typically, membranes, preferably, PTFE membranes) have a water intrusion pressure in the range of 7 mbar to 25 mbar, preferably in the range of from 10 mbar to 20 mbar.

In some aspects, the adsorption media is immobilized on a porous substrate (e.g., foam) having in the range of 6-12 pores per inch, for example, 10 pores per inch. Additionally, or alternatively, the adsorption media immobilized on a porous substrate (e.g., the substrate having a thickness of about 10 mm) can have a pressure loss of less than 40 Pa at 1.0 m/s, or less than 10 Pa at 0.35 m/s. The adsorption media provide for the adsorption of volatile organic compounds with boiling points of 50°C or more. Suitable media and substrates are known in the art and are commercially available.

The pleated hydrophobic porous media can have any desired critical wetting surface tension (CWST, as defined in, for example, U.S. Patent 4,925,572). The CWST can be selected as is known in the art, e.g., as additionally disclosed in, for example, U.S. Patents 5,152,905, 5,443,743, 5,472,621, and 6,074,869. In those aspects wherein the hydrophobic porous media are porous PTFE membranes, the CWST is typically in the range of 24 to 28 dynes/cm (24 to 28 x 10⁻⁵ N/cm).

The filter can include additional elements, layers, or components, that can have different structures and/or functions, e.g., at least one of any one or more of the following: prefiltration, support, drainage, spacing and cushioning.

Using Figures 9A-9E for reference, the illustrated aspect of the MaVE filter device 1000 according to the invention comprises a main housing 1200 including a main housing body 1100, an inlet duct 1201 connected to a first end 1101 of the main housing body, an outlet duct 1202 connected to a second end 1102 of the main housing body; the illustrated aspect of a MaVE filter 500 arranged in the main housing between the inlet duct and the outlet duct. The inlet port of the inlet duct and/or the outlet port of the outlet duct can be offset from the ends of the filter, e.g., the ports can be offset from the linear axis (first filter first end to second filter second end) of the MaVE filter. As illustrated in Figure 9C, the outlet duct port 1202A of the outlet duct 1202 can be offset from the second end of the filter 200 if desired depending on the space available in the aircraft. Alternatively, or additionally, the inlet duct port 1201A of the inlet duct 1201 can be offset from the first end of the filter 100 if desired depending on the space available in the aircraft.

In a preferred aspect, the second end 1102 of the main housing body includes at least one cavity for receiving a detent arrangement on the MaVE filter, so that the MaVE filter can be locked in place in the main housing, e.g., so that the MaVE filter does not rotate. Using Figures 1B, 1E, and 9B for reference, the illustrated aspect of the MaVE filter includes 3 detent arrangements 291A, 291B, and 291C (shown including outwardly protruding bayonets, *see* 292B in Figure 1E) on the second end cap 210, that fit in cavities 1100A, 1100B, and 1100C in the second end of the main housing body. The detent arrangements include threaded stainless steel housings each containing a spring and a ball bearing, where the spring is applying a load to a ball bearing and the bayonets rotate (e.g., about 5°) to lock in place in the cavities in the locked position accepting the spring loaded ball bearing once the MaVE filter is inserted in the main housing body. Figures 1E (reference 497B) and 7A (references 497A-497C) show the location(a) of the inserted housing(s).

Using the aspect shown in Figures 9A and 9I for reference the MaVe filter device includes a first clamping arrangement 1401 clamping the inlet duct 1201 to the first end 1101 of the housing body (Figure 9A shows the inlet duct and first end in contact without the first clamping arrangement, Figure 9I shows the structures clamped together by the first clamping arrangement), and a second clamping arrangement 1402 clamping the outlet duct 1202 to the second end 1102 of the main housing body (Figure 9A shows the outlet duct and second end in contact without the second clamping arrangement, Figure 9I shows the structures clamped together by the second clamping arrangement). While the clamping arrangements are illustrated as v-band clamps, a variety of clamping arrangement are suitable and are known in the art. In this illustrated aspect, a spider plate 1600 (fitted inside the first housing first end, radially supporting the filter by engaging with the filter first end cap; *see*, Figures 9J-9K) is arranged between the inlet duct and the first end of the housing body, and is also clamped by the first clamping arrangement.

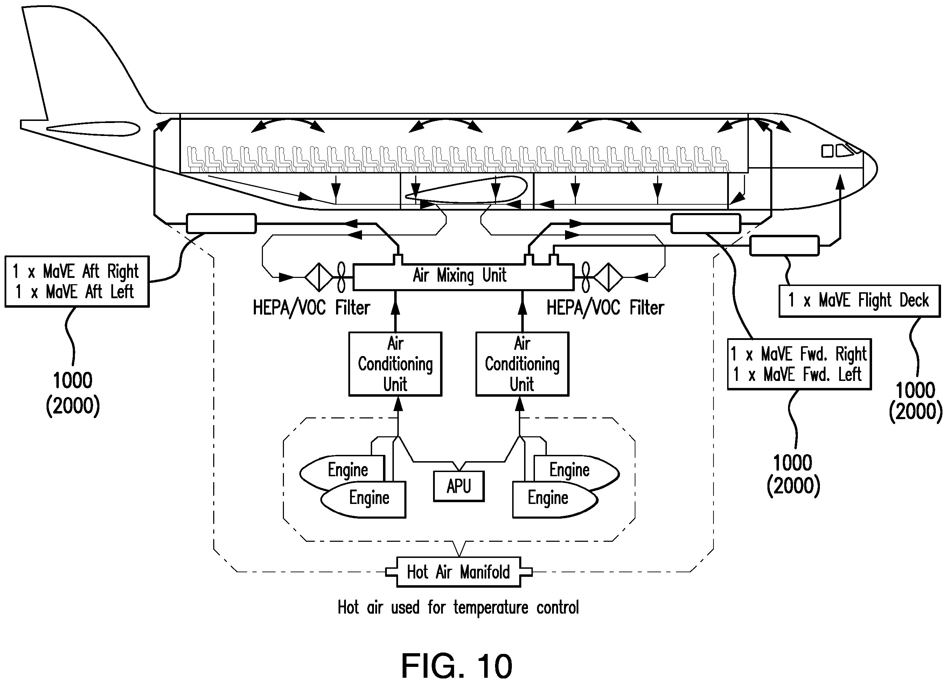

Typically, two or more MaVE filter devices (and two or more systems as discussed below), more typically, three or more MaVE filter devices (and three or more systems), will be utilized in an aircraft, replacing sections of original equipment manufacturing ducting in distribution lines downstream of the air mixing unit (mixer chamber). In some aspects, 5 MaVE filter devices or 5 systems including MaVE filter devices will be utilized, each in separate distribution lines (*see*, *for example*, Figure 10). Preferably, the use of inlet and outlet ducts allow a standardized housing to be fitted into the desired locations and interface with existing aircraft ducting, with minimal pressure loss. The inlet and outlet ducts and/or associated duct ports can be arranged for use in a variety of available spaces. For example, as discussed above and as shown in Figure 9C, the outlet duct port can be offset from the second end of the filter 200.

In a preferred aspect, a system 2000 for filtering aircraft air comprises the MaVE filter device 1000, further comprising a bypass valve 1500 including a pivotable bypass plate 1501, the bypass valve being arranged in a hollow sleeve 1305 having a first end 1301 and a second end 1302, wherein the sleeve 1305 is arranged between the main housing body and the outlet duct, the sleeve providing an aircraft air flow path through the MaVE filter device partially bypassing the MaVE filter 500 when the bypass valve is open (i.e., the bypass plate is pivoted to provide an open flow path through the sleeve; while a portion of aircraft air passes through the sleeve and outlet duct port 1202A, the MaVE filter is not fully bypassed, as a portion of aircraft air will pass through the filter 500, including passing through the first and second stage filters and through the second end cap). In some aspects, partially bypassing the MaVE filter can include passing some aircraft air through at least one component of the MaVE filter 500 (such as the first and/or second stage filter), but without passing through the second end cap, before passing the air through the sleeve and outlet duct port.

The aspect shown in Figures 9C and 9H also show a bypass valve actuator 1510 including a stepper motor for actuating the bypass valve 1500. When the bypass valve is closed (i.e., the bypass plate is pivoted to block the flow path through the sleeve) aircraft air flows through the MaVE filter 500 (including through the second end cap), rather than the sleeve).

In some aspects, the bypass valve can be operated such that the bypass plate is pivoted less than a full pivot to reduce the flow through the sleeve rather than block the flow through the sleeve.

A variety of bypass valves and associated components such as valve actuators and stepper motors are suitable as is known in the art. Commercially available valves and associated components are suitable.

The sleeve can be attached by clamping arrangements such as, for example v-band clamps and/or elastomeric sleeves. Illustratively, Figure 9L shows first end 1301 of the hollow sleeve and an elastomeric sleeve 1325 sealing the first end 1301 (hollow sleeve inlet) to the main housing body, clamped in place with a clamping arrangement 1403 illustrated as two band clamps (1403A, 1403B), and second end 1302 of the hollow sleeve (hollow sleeve outlet) clamped to a main housing body end cap 1105 by a clamping arrangement 1404 illustrated as a v-band clamp.

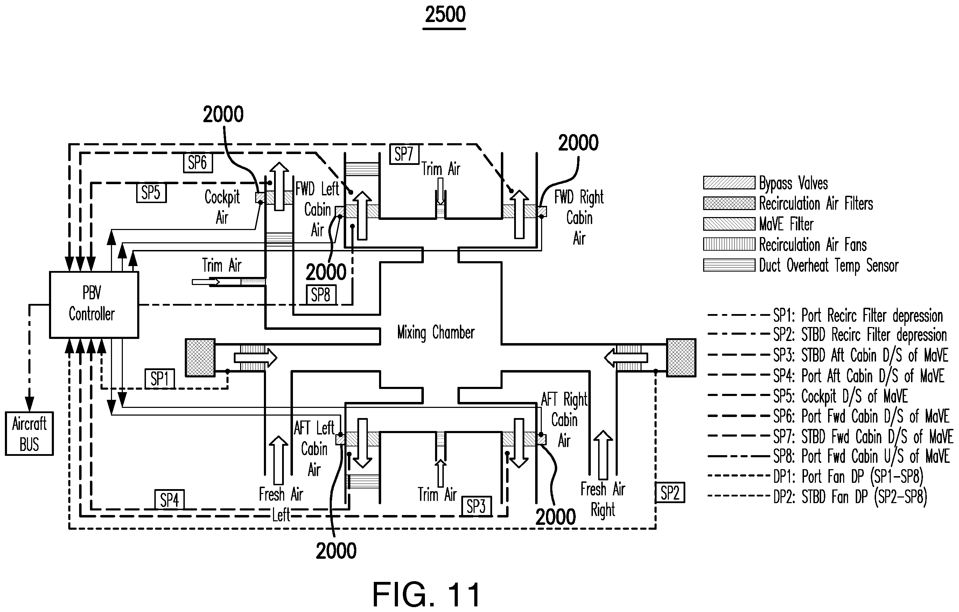

A control system 2500 (e.g., a motor control unit) communicates with the various systems 2000 for filtering aircraft air (see, Figure 11 showing an exemplary control system for controlling the bypass valve(s) in systems 2000 and communicating with an aircraft BUS and central processing unit that receives data from the sensors and sends commands to the motor control unit), e.g., wherein the systems 2000 are installed in the flight deck supply line and low-pressure distribution lines in each of four cabin distribution ducts), including sensors for monitoring target ECS parameters such as, one or more of any of the following: recirculation fan performance (e.g., recirculation fan stall); mixer chamber pressure (e.g., mixer chamber over pressure such as ≥ 25 mbar); duct flow imbalance (single line/individual duct blockage); and low flow to flight deck (cockpit flow reduction). The operation (actuation or opening) of the bypass valve(s) enables the MaVE filter(s) to be bypassed, ensuring air flow to the cabin and flight deck is maintained once one or the more target ECS parameters is/are achieved. The particular target parameters and/or specific values or rates of the target parameters and the timing of operations may vary depending on, for example, the particular aircraft and/or the requirements of the aircraft manufacturer.

Preferably, as illustrated in Figure 9A, a system 2000 for filtering aircraft air includes at least an upstream differential pressure sensor 1801 arranged in one filter device 1000 upstream of the first stage filter 100 (e.g., fitted to the inlet duct of a single filter device), and at least a downstream differential pressure sensor 1802 arranged in each of the filter devices 1000 downstream of the second stage filter 200 (e.g., fitted to the outlet duct of each filter device). For example, with reference to Figure 11 (discussed in more detail below), 1801 represents differential pressure sensor SP1 (arranged upstream, fitted to the inlet duct of one filter device 1000 in one system 2000), wherein if the aircraft included 5 systems each including separate MaVE filter devices, 1802 (arranged downstream, fitted to the outlet duct of each filter device 1000 in each of the other systems 2000) could represent SP3 in the system also including SP1, and 1802 could represent (individually) SP4, SP5, SP6, and SP7 in the other 4 systems (that do not include upstream differential pressure sensor 1801).

Figure 11 shows an exemplary arrangement of differential pressure sensors in a control system 2500 (e.g., motor control unit) controlling bypass valves connected to MaVE filter devices in systems 2000 (wherein "STBD" refers to starboard (right side); port refers to the left side; "D/S" refers to downstream, "Aft" refers to the rear; and "DP" refers to differential pressure). Thus, for example, in order to prevent the recirculation fan from stalling to maintain recirculation air flow and protect the recirculation fans, fan differential pressure derived from sensor SP1 and sensor SP2 (differential pressure sensors SP1 and SP2 are connected to existing pressure tapings built into the recirculation filter housings. As these tapings are positioned between the recirculation filter and fans, a depression rather than a positive pressure is generated by the fan) to sensor SP8 allows derivation of the flow state, to ensure that fan flow is not reduced below a target parameter value (rate), such as, for example, 26-34 mbar differential pressure. With respect to cockpit flow, flow can be maintained if, for example, the bypass valve opens if there is a blockage in the cockpit line, or if there is a reduction in the recirculation fan flow below the minimum requirement (e.g., thus the downstream static differential can be monitored, for example, sensor SP5 to sensor SP6). Monitoring downstream static differential can reflect individual duct blockage as signified by differences in static pressures downstream of each MaVE device. Protecting the mixer chamber from exceeding the certified limit (e.g., 25 mbar) for extended periods of time under normal operating conditions can be provided by monitoring sensor SP8 arranged upstream of a MaVE device.

While the specific values of the target parameters and timing of operations may vary depending on, for example, the particular aircraft, the following is one example of ongoing monitoring (e.g., even when the valves are open to differentiate between a transient and permanent blocked condition) by the control system: If a bypass valve is activated (actuated/opened), after W minutes (e.g., 5 minutes) of operation, the control system should close the bypass valve(s); if any of the target parameters values are subsequently reached within X minutes (e.g., 2 minutes), the bypass valve(s) are re-activated; the control system repeats a bypass valve closing cycle twice more, once after further Y minutes (e.g., 15 minutes), and then subsequently after further Z minutes (e.g., 30 minutes) if necessary. If after a third attempt, bypass valve activation is still triggered, all bypass valves remain activated and checks for closing are done (e.g., hourly)

The following example further illustrates the invention but, of course, should not be construed as in any way limiting its scope.

### EXAMPLE

This example demonstrates that a MaVE filter device according to an aspect of the invention manages water over a range of water injection rates. The MaVE filter device exhibits stable operation at a water injection rate of 350 ml/min for over 60 minutes with a maximum filter differential pressure of 2.5 to 3.0 mbar over the entire period.

The results are compared to prototype filter devices without water management features. These prototype filter devices exhibit stable operation at a water injection rate of 20 ml/min, but when challenged with 200 ml/min, the pressure drop across the filter increases by 9.5 mbar, wherein the test is terminated after 16 minutes when the filter differential pressure is 11.5 mbar.

## Claims

1. A system for filtering aircraft air comprising:
(A) a mist and vapor eliminating (MaVE) filter device (1000) comprising
a main housing (1200) including a main housing body (1100), an inlet duct (1201) connected to a first end of the main housing body, and an outlet duct connected to a second end (1101) of the main housing body (1100); and,
a mist and vapor eliminating (MaVE) filter (500) comprising a first stage filter (100) and a second stage filter (200);
(a) the first stage hollow filter comprising a first housing (150) having a first housing first end (151) and a first housing second end (152); and, arranged in the first housing:
(i) a first adsorption element (170) comprising activated carbon and/or
activated clay; and,
(ii) a first hydrophobic pleated hollow porous medium (180) surrounding
the first adsorption element;
the first stage hollow filter including a first end cap (110) connected to the first housing first end;
(b) the second stage hollow filter comprising
a second housing (250) having second housing first end (251) and a second housing second end (252);
and, arranged in the second housing:
(iii) a second adsorption element (270) comprising activated carbon and/or activated clay;
(iv) a second hydrophobic pleated hollow porous medium (280) surrounding the second adsorption element;
the second stage hollow filter including a second end cap (210) connected to the second housing second end;
wherein the first housing second end is connected to the second housing first end by an intermediate end cap (310);
the intermediate end cap including a first drain channel (311) for draining condensed water between the first housing second end and the second housing first end; and,
the second end cap including a second drain channel (211) for draining condensed water at the second housing second end;
wherein the mist and vapor eliminating filter device is arranged in the main housing between the inlet duct (1201) and the outlet duct (1202);
the system further comprising
(B) a bypass valve (1500) including a pivotable bypass plate (1501), arranged in a hollow sleeve (1305), wherein the hollow sleeve is arranged between the main housing body and the outlet duct, the hollow sleeve providing an aircraft air flow path through the MaVE filter device partially bypassing the MaVE filter when the bypass valve is opened.

2. The system of claim 1, wherein the first adsorption element (170) and the first hydrophobic pleated hollow porous medium (180) each have a tapered configuration.

3. The system of claim 1 or 2, wherein the MaVE filter (500) further comprises a first adsorption element end cap (175), sealed to an end of the first adsorption element, the first adsorption element end cap contacting the intermediate end cap (310); and
a second adsorption element end cap (275), sealed to an end of the second adsorption element, the second adsorption element end cap contacting the second end cap (210).

4. The system of any one of claims 1-3, wherein the first hydrophobic pleated hollow porous medium (180) is retained by the intermediate end cap (310), and the second hydrophobic pleated hollow porous medium (280) is retained by the end cap.

5. The system of any one of claims 1-4, wherein the intermediate end cap (310) provides a drain gap in the range of from 6 mm to 18 mm for the first drain channel, and the second end cap (210) provides a drain gap in the range of from 6 mm to 18 mm for the second drain channel.

6. The system of any one of claims 1-5, wherein the MaVE filter (500) includes at least two joining arrangements connecting the first housing second end to the intermediate end cap, and at least two additional joining arrangements connecting the second housing second end to the second end cap.

7. The system of any one of claims 1-6, wherein the first stage hollow filter includes a first stage outer cage and a first stage inner core; and, the second stage hollow filter includes a second stage outer cage and a second stage inner core.

8. A method of filtering aircraft cabin air, the method comprising passing aircraft air through the system of any one of claims 1-7;
opening the bypass valve;
flowing aircraft air through the MaVE filter device (500) while partially bypassing the MaVE filter;
collecting free water on an upstream surface of the first hydrophobic pleated hollow porous medium (180) and collecting free water on an upstream surface of the second hydrophobic pleated hollow porous medium 280); and
passing the collected free water on the upstream surface of the first hydrophobic pleated hollow porous medium through the first drain channel, and passing the collected free water on the upstream surface of the second hydrophobic pleated hollow porous medium through the second drain channel.

9. The method of claim 8, further comprising closing the bypass valve and flowing aircraft air through the MaVE filter.

## Patentansprüche

1. System zum Filtern von Flugzeugluft, umfassend:
(A) eine Filtervorrichtung (1000) zum Eliminieren von Nebel und Dampf (MaVE), umfassend:
ein Hauptgehäuse (1200), das einen Hauptgehäusekörper (1100), einen Einlasskanal (1201), der mit einem ersten Ende des Hauptgehäusekörpers verbunden ist, und einen Auslasskanal beinhaltet, der mit einem zweiten Ende (1101) des Hauptgehäusekörpers (1100) verbunden ist; und
ein Filter (500) zum Eliminieren von Nebel und Dampf, das ein Filter (100) der ersten Stufe und ein Filter (200) der zweiten Stufe umfasst;
(a) das Hohlfilter der ersten Stufe umfasst
ein erstes Gehäuse (150) mit einem ersten Ende (151) des ersten Gehäuses und einem zweiten Ende (152) des ersten Gehäuses;
und angeordnet in dem ersten Gehäuse:
(i) ein erstes Absorptionselement (170), das Aktivkohl und/oder aktivierte Bleicherde umfasst; und
(ii) ein erstes hydrophobes plissiertes hohles poröses Medium (180), das das erste Absorptionselement umgibt;
das Hohlfilter der ersten Stufe eine erste Endkappe (110) umfasst, die mit dem ersten Ende des ersten Gehäuses verbunden ist;
(b) das Hohlfilter der zweiten Stufe umfasst
ein zweites Gehäuse (250) mit einem ersten Ende (251) des zweiten Gehäuses und einem zweiten Ende (252) des zweiten Gehäuses;
und angeordnet in dem zweiten Gehäuse:
(iii) ein zweites Absorptionselement (270), das Aktivkohle und/oder aktivierte Bleicherde umfasst;
(iv) ein zweites hydrophobes plissiertes hohles poröses Medium (280), das das zweite Absorptionselement umgibt;
das Hohlfilter der zweiten Stufe eine zweite Endkappe (210) umfasst, die mit dem zweiten Ende des zweiten Gehäuses verbunden ist;
wobei das zweite Ende des ersten Gehäuses mit dem ersten Ende des zweiten Gehäuses durch eine Zwischenendkappe (310) verbunden ist;
die Zwischenendkappe einen ersten Ablaufdurchgang (311) zum Ablaufen von kondensiertem Wasser zwischen dem zweiten Ende des ersten Gehäuses und dem ersten Ende des zweiten Gehäuses beinhaltet; und
die zweite Endkappe einen zweiten Ablaufdurchgang (211) zum Ablaufen von kondensiertem Wasser an dem zweiten Ende des zweiten Gehäuses beinhaltet;
wobei die Filtervorrichtung zum Eliminieren von Nebel und Dampf in dem Hauptgehäuse zwischen dem Einlasskanal (1201) und dem Auslasskanal (1202) angeordnet ist;
das System ferner umfasst:
(B) ein Bypassventil (1500), das eine schwenkbare Bypassplatte (1501) beinhaltet, die in einem hohlen Mantel (1305) angeordnet ist, wobei der hohle Mantel zwischen dem Hauptgehäusekörper und dem Auslasskanal angeordnet ist, der hohle Mantel einen Flugzeugluftströmungspfad durch die MaVE-Filtervorrichtung bereitstellt, indem das MaVE-Filter teilweise umgangen wird, wenn das Bypassventil geöffnet ist.

2. System nach Anspruch 1, wobei das erste Absorptionselement (170) und das erste hydrophobe plissierte hohle poröse Medium (180) jeweils eine verjüngte Konfiguration aufweisen.

3. System nach Anspruch 1 oder 2, wobei das MaVE-Filter (500) ferner eine erste Absorptionselementendkappe (175), die an ein Ende des ersten Absorptionselement versiegelt ist, wobei die erste Absorptionselementendkappe die Zwischenendkappe (310) berührt; und eine zweite Absorptionselementendkappe (275) umfasst, die an ein Ende des zweiten Absorptionselement versiegelt ist, wobei die zweite Absorptionselementendkappe die zweite Endkappe (210) berührt.

4. System nach einem der Ansprüche 1-3, wobei das erste hydrophobe plissierte hohle poröse Medium (180) durch die Zwischenendkappe (310) zurückgehalten wird und das zweite hydrophobe plissierte hohle poröse Medium (280) durch die Endkappe zurückgehalten wird.

5. System nach einem der Ansprüche 1-4, wobei die Zwischenendkappe (310) einen Ablaufspalt in dem Bereich von 6 mm bis 18 mm für den ersten Ablaufdurchgang bereitstellt, und die zweite Endkappe (210) einen Ablaufspalt in dem Bereich von 6 mm bis 18 mm für den zweiten Ablaufdurchgang bereitstellt.

6. System nach einem der Ansprüche 1-5, wobei das MaVE-Filter (500) wenigstens zwei Verbindungsanordnungen, die das zweite Ende des ersten Gehäuses mit der Zwischenendkappe verbinden, und wenigstens zwei zusätzliche Verbindungsanordnungen umfasst, die das zweite Ende des zweiten Gehäuses mit der zweiten Endkappe verbinden.

7. System nach einem der Ansprüche 1-6, wobei das Hohlfilter der ersten Stufe einen äußeren Käfig der ersten Stufe und einen inneren Kern der ersten Stufe beinhaltet; und das Hohlfilter der zweiten Stufe einen äußeren Käfig der zweiten Stufe und einen inneren Kern der zweiten Stufe beinhaltet.

8. Verfahren zum Filtern von Flugzeugkabinenluft, wobei das Verfahren das Leiten von Flugzeugluft durch das System nach einem der Ansprüche 1-7 umfasst;
Öffnen des Bypassventils;
Fließen von Flugzeugluft durch die MaVE-Filtervorrichtung (500), während das MaVE-Filter teilweise umgangen wird;
Sammeln von freiem Wasser auf einer stromaufwärts gelegenen Oberfläche des ersten hydrophoben plissierten hohlen porösen Mediums (180) und Sammeln von freiem Wasser auf einer stromaufwärts gelegenen Oberfläche des zweiten hydrophoben plissierten hohlen porösen Mediums (280);
Leiten des gesammelten freien Wassers auf der stromaufwärts gelegenen Oberfläche des ersten hydrophoben plissierten hohlen porösen Mediums durch den ersten Ablaufdurchgang und Leiten des gesammelten freien Wassers auf der stromaufwärts gelegenen Oberfläche des zweiten hydrophoben plissierten hohlen porösen Mediums durch den zweiten Ablaufdurchgang.

9. Verfahren nach Anspruch 8, ferner umfassend das Schließen des Bypassventils und Fließen von Flugzeugluft durch das MaVE-Filter.

## Revendications

1. Système de filtration d'air pour aéronef comprenant :
(A) un dispositif de filtration éliminateur de brouillard et de vapeur (FEBV) (1000) comprenant
un boîtier principal (1200) comprenant un corps de boîtier principal (1100), un conduit d'entrée (1201) raccordé à une première extrémité du corps de boîtier principal, et un conduit de sortie raccordé à une deuxième extrémité (1101) du corps de boîtier principal (1100), et
un filtre éliminateur de brouillard et de vapeur (FEBV) (500) comprenant un filtre de premier étage (100) et un filtre de deuxième étage (200) ;
(a) le filtre creux de premier étage comprenant
un premier boîtier (150) doté d'une première extrémité (151) et d'une deuxième extrémité (152),
et, disposés dans le premier boîtier :
(i) un premier élément d'adsorption (170) comprenant du charbon actif et/ou de l'argile activée, et
(ii) un premier milieu poreux creux plissé hydrophobe (180) entourant le premier élément d'adsorption ;
le filtre creux de premier étage comprenant un premier embout (110) raccordé à la première extrémité du premier boîtier ;
(b) le filtre creux de deuxième étage comprenant
un deuxième boîtier (250) doté d'une première extrémité (251) et d'une deuxième extrémité (252),
et, disposés dans le deuxième boîtier :
(iii) un deuxième élément d'adsorption (270) comprenant du charbon actif et/ou de l'argile activée,
(iv) un deuxième milieu poreux creux plissé hydrophobe (280) entourant le deuxième élément d'adsorption ;
le filtre creux de deuxième étage comprenant un deuxième embout (210) raccordé à la deuxième extrémité du deuxième boîtier ;
ladite deuxième extrémité du premier boîtier étant raccordée à la première extrémité du deuxième boîtier par un embout intermédiaire (310) ;
l'embout intermédiaire comprenant un premier canal d'évacuation (311) pour évacuer l'eau condensée entre la deuxième extrémité du premier boîtier et la première extrémité du deuxième boîtier ; et
le deuxième embout comprenant un deuxième canal d'évacuation (211) pour évacuer l'eau condensée au niveau de la deuxième extrémité du deuxième boîtier ;
ledit dispositif de filtration éliminateur de brouillard et de vapeur étant disposé dans le boîtier principal entre le conduit d'entrée (1201) et le conduit de sortie (1202) ;
le système comprenant en outre
(B) une soupape de dérivation (1500) comprenant une plaque de dérivation pivotante (1501), disposée dans un manchon creux (1305), le manchon creux étant disposé entre le corps du boîtier principal et le conduit de sortie et offrant un trajet d'écoulement d'air d'aéronef à travers le dispositif de filtration FEBV qui contourne partiellement le filtre FEBV lorsque la soupape de dérivation est ouverte.

2. Système selon la revendication 1, dans lequel le premier élément d'adsorption (170) et le premier milieu poreux creux plissé hydrophobe (180) ont chacun une configuration effilée.

3. Système selon la revendication 1 ou 2, dans lequel le filtre FEBV (500) comprend en outre
un premier embout d'élément d'adsorption (175), fixé hermétiquement à une extrémité du premier élément d'adsorption, le premier embout d'élément d'adsorption étant en contact avec l'embout intermédiaire (310), et
un deuxième embout d'élément d'adsorption (275), fixé hermétiquement à une extrémité du deuxième élément d'adsorption, le deuxième embout d'élément d'adsorption étant en contact avec le deuxième embout (210).

4. Système selon l'une quelconque des revendications 1 à 3, dans lequel le premier milieu poreux creux plissé hydrophobe (180) est retenu par l'embout intermédiaire (310), et le deuxième milieu poreux creux plissé hydrophobe (280) est retenu par l'embout.

5. Système selon l'une quelconque des revendications 1 à 4, dans lequel l'embout intermédiaire (310) offre un espace d'évacuation compris entre 6 mm et 18 mm pour le premier canal d'évacuation, et le deuxième embout (210) offre un espace d'évacuation compris entre 6 mm et 18 mm pour le deuxième canal d'évacuation.

6. Système selon l'une quelconque des revendications 1 à 5, dans lequel le filtre FEBV (500) comprend au moins deux dispositifs d'assemblage raccordant la deuxième extrémité du premier boîtier à l'embout intermédiaire, et au moins deux dispositifs d'assemblage supplémentaires raccordant la deuxième extrémité du deuxième boîtier au deuxième embout.

7. Système selon l'une quelconque des revendications 1 à 6, dans lequel le filtre creux de premier étage comprend une cage extérieure de premier étage et un noyau interne de premier étage, et le filtre creux de deuxième étage comprend une cage extérieure de deuxième étage et un noyau interne de deuxième étage.

8. Procédé de filtration d'air de cabine d'aéronef, le procédé comprenant
le passage de l'air de l'aéronef à travers le système selon l'une quelconque des revendications 1 à 7,
l'ouverture de la soupape de dérivation,
la circulation de l'air de l'aéronef à travers le dispositif de filtration FEBV (500) avec contournement partiel du filtre FEBV,
la collecte de l'eau libre sur une surface amont du premier milieu poreux creux plissé hydrophobe (180) et la collecte de l'eau libre sur une surface amont du deuxième milieu poreux creux plissé hydrophobe (280), et
le passage de l'eau libre collectée sur la surface amont du premier milieu poreux creux plissé hydrophobe à travers le premier canal d'évacuation, et le passage de l'eau libre collectée sur la surface amont du deuxième milieu poreux creux plissé hydrophobe à travers le deuxième canal d'évacuation.

9. Procédé selon la revendication 8, comprenant en outre la fermeture de la soupape de dérivation et le passage de l'air de l'aéronef à travers le filtre FEBV.
